# EUROPÄISCHE PATENTSCHRIFT

(11) **EP 1 694 120 B1**
(45) Veröffentlichungstag und Bekanntmachung des Hinweises auf die Patenterteilung: **05.12.2007**
(21) Anmeldenummer: 04803698.2
(22) Anmeldetag: 09.12.2004
(51) Int. Cl.: A01N 25/24, C09D 5/02

(54) **VERWENDUNG VON BIOZIDE ENTHALTENDEN, IN WASSER REDISPERGIERBAREN POLYMERPULVER-ZUSAMMENSETZUNGEN IN MINERALISCHEN BAUSTOFFMASSEN**
USE OF BIOCIDE-CONTAINING, WATER-REDISPERSIBLE POLYMER POWDER COMPOSITIONS IN MINERAL CONSTRUCTION MATERIALS
UTILISATION DANS DES MATERIAUX DE CONSTRUCTION MINERAUX DE COMPOSITIONS PULVERULENTES POLYMERES REDISPERSIBLES DANS L'EAU CONTENANT DES BIOCIDES

(30) Priorität: 18.12.2003 DE 10359703
(43) Veröffentlichungstag der Anmeldung: 30.08.2006
(73) Patentinhaber: Wacker Polymer Systems GmbH & Co. KG, 84489 Burghausen (DE)
(72) Erfinder: WEITZEL, Hans-Peter, 84571 Reischach (DE); JODLBAUER, Franz, 84533 Marktl (DE)
(74) Vertreter: Schuderer, Michael
(86) Internationale Anmeldenummer: PCT/EP2004/014044
(87) Internationale Veröffentlichungsnummer: WO 2005/058033

(56) Entgegenhaltungen:
- US-A- 4 743 475
- US-A1- 2002 011 187

## Beschreibung

Die Erfindung betrifft die Verwendung von Biozide enthaltenden, in Wasser redispergierbaren Polymerpulver-Zusammensetzungen in mineralischen Baustoffmassen.

Bei mineralischen Baustoffmassen, beispielsweise kalk- oder zementgebundenen Baustoffen, wie Putzen, Spachtelmassen und Bauklebern besteht die Notwendigkeit diese vor Witterungseinflüssen und mikrobiologischem Befall durch Mikroorganismen, Pilze und Algen zu schützen. Besonders unter feuchten Witterungsbedingungen werden Fassaden regelmäßig nach wenigen Jahren durch Algen- und Pilzbewuchs geschädigt, wenn diese nicht durch entsprechende Maßnahmen geschützt sind. In der Praxis behilft man sich durch Verwendung von Fungiziden und/oder Algiziden, die den Baustoffen im Trockenmörtelwerk oder vor Ort an der Baustelle in hohen Wirkstoffkonzentrationen zugesetzt werden (Filmkonservierung). Nachteilig ist dabei, dass diese Wirkstoffe bei dem in wässrigen Baustoffmassen vorliegenden stark basischen Milieu rasch abgebaut werden, und daher entsprechend hohe Mengen eingesetzt werden müssen bzw. die Wirksamkeit im Lauf der Zeit stark abnimmt.

Bei der Verwendung von Kunststoffdispersionen ist die Topfkonservierung schon lange Stand der Technik, um das wässrige Produkt vor mikrobiologischem Befall zu schützen. Hierzu werden in erster Linie biozid wirkende Verbindungen eingesetzt.

In Wasser redispergierbare Pulver auf der Basis von Homo- oder Copolymerisaten von ethylenisch ungesättigten Monomeren werden im Baubereich als Bindemittel, beispielsweise in Kombination mit hydraulisch abbindenden Bindemitteln wie Zement, eingesetzt. Beispielsweise dienen diese in Bauklebern, Putzen, Mörteln und Farben der Verbesserung der mechanischen Festigkeit und der Haftung. Bislang wird bei der Herstellung und Verwendung von Redispersionspulvern auf den Einsatz mikrobiologisch aktiver Zusätze verzichtet, da diese Systeme im trockenen Zustand nicht zu Befall neigen. Die dem Stand der Technik entsprechenden Redispersionpulver leisten daher keinen Beitrag zum Schutz von Fassadenbeschichtungen gegen mikrobiologischen Befall und Befall durch Algen und Pilze.

Aus der EP-A 862856 ist bekannt Pflanzenschutzmittel, wie Pestizide, in Kombination mit redispergierbarem Polymerpulver zur retardierten Freisetzung der Wirkstoffkomponente einzusetzen. In der WO-A 00/05275 werden redispergierbare Polymerpulver als inerte Trägersubstanzen für Aktivkomponenten beschrieben, beispielsweise für Pflanzenschutzmittel und Medikamente. Aus der WP10105 sind Beschichtungsmittel bekannt, welche Fungizide in mit Cyclodextrin komplexierter Form enthalten.

In der US-A 2002/011187 wird eine Mörtelzusammensetzung für das Verputzen von Gipskartonplatten beschrieben. Der Trockenmörtelzusammensetzung kann zusätzlich zu Kalk, polymerem Bindemittel und Verdickungsmittel noch ein Konservierungsmittel/Biozid zugegeben werden. Die Verwendung von mit Biozid modifizierten Dispersionspulvern wird nicht beschrieben.

Es bestand daher die Aufgabe, ein redispergierbares Dispersionspulver für Baustoffmassen zur Verfügung zu stellen, welches sich beim Einsatz zur Vergütung von Außenbeschichtungen zusätzlich wirksam erweist gegen Befall durch Mikroorganismen, Algen und Pilze.

Gegenstand der Erfindung ist die Verwendung von Biozide enthaltenden, in Wasser redispergierbaren Polymerpulver-Zusammensetzungen in mineralischen Baustoffmassen, wobei die in Wasser redispergierbaren Polymerpulver-Zusammensetzungen auf Basis eines filmbildenden Polymerisats 0.001 bis 0.5 Gew.-% eines biozid wirkenden Additivs enthalten.

Als Biozide, beziehungsweise biozid wirkende Additive, sind im Rahmen dieser Erfindung Bakterizide, Fungizide und Algizide zu verstehen.

Geeignete Biozide sind im Handel erhältlich. Gegen den Befall von Bakterien, Hefen, Pilzen und Algen werden üblicherweise Wirkstoffe aus der Konservierungsmittelklasse der Isothiazolinone und Benzimidazole eingesetzt. Beispiele hierfür sind N-Octylisothiazolinon, Di-Chlor-N-Octylisothiazolinon, Chlormethylisothiazolinon, Methylisothiazolinon, Benzisothiazolinon. Des weiteren geeignet als Biozide sind Benzimidazolderivate, z.B. 2-(Methoxy-carbonylamino)-benzimidazol, 2,4-Diamino-6-methylthio-1,3,5-triazin-Derivate, o-Phenylphenol, substituierte Harnstoffe und Phenylharnstoffe, Phthalimid-Derivate, z.B. N-(Trichlormethylthio)-phthalimid, Iodcarbamat, Pyrethroide, Chloracetamid, Natriumborat, Methylisopropylphenol, Bariummetaborat, Dithiocarbaminate.

Der Wirkstoffgehalt wird in Abhängigkeit der Wirksamkeit und der zu lösenden Problemstellung eingestellt. Im allgemeinen wird ein Gehalt von 0.001 bis 0.5 Gew.-%, bevorzugt 0.001 bis 0.2 Gew.-%, besonders bevorzugt 0.001 bis 0.1 Gew.-%, jeweils bezogen auf das Gesamtgewicht der in Wasser redispergierbaren Polymerpulver-Zusammensetzung, verwendet.

Geeignete filmbildende Polymerisate sind solche auf der Basis von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0.1 bis 5 Gew.-%, bezogen auf das Gesamtgewicht des Monomergemisches, Hilfsmonomere copolymerisiert werden. Bevorzugt werden 0.5 bis 2.5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)-und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von ≤ 40°C, vorzugsweise -10°C bis +25°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden Homo- oder Mischpolymerisate, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Besonders bevorzugt werden Mischpolymerisate mit Vinylacetat und Ethylen; mit Vinylacetat, Ethylen und einem Vinylester von α-verzweigten Monocarbonsäuren mit 9 bis 11 C-Atomen; mit n-Butylacrylat und 2-Ethylhexylacrylat und/oder Methylmethacrylat; mit Styrol und einem oder mehreren Monomeren aus der Gruppe Methylacrylat, Ethylacrylat, Propylacrylat, n-Butylacrylat, 2-Ethylhexylacrylat; mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Am meisten bevorzugt werden Polymerisate der obengenannten Zusammensetzungen, welche noch 0.1 bis 5 Gew.-%, bezogen auf das Gesamtgewicht des Polymerisats, Monomereinheiten enthalten, welche sich ableiten von einem oder mehreren Comonomeren aus der Gruppe umfassend ethylenisch ungesättigte Mono- und Dicarbonsäuren wie Acrylsäure, Methacrylsäure, Fumarsäure und Maleinsäure; ethylenisch ungesättigte Carbonsäureamide und -nitrile wie Acrylamid und Acrylnitril; Monoester der Fumarsäure und Maleinsäure, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure.

Die Herstellung der filmbildenden Polymerisate erfolgt nach dem Emulsionspolymerisationsverfahren oder nach dem Suspensionspolymerisationsverfahren in Gegenwart von Schutzkolloiden und/oder Emulgatoren, vorzugsweise nach dem Emulsionspolymerisationsverfahren, wobei die Polymerisationstemperatur im allgemeinen 40°C bis 100°C, vorzugsweise 60°C bis 90°C beträgt, und bei der Copolymerisation von gasförmigen Comonomeren wie Ethylen auch unter Druck, im allgemeinen zwischen 5 bar und 100 bar, gearbeitet werden kann. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind Natriumpersulfat, Wasserstoffperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind beispielsweise Natriumsulfit, Natriumhydroxymethansulfinat und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Geeignete Emulgatoren, die in 0.5 bis 10 Gew.-% bezogen auf die Monomermenge, eingesetzt werden können sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der Biozide enthaltenden, in Wasser redispergierbaren Polymerpulver-Zusammensetzungen werden die Biozide den wässrigen Dispersionen in der angegebenen Menge zugemischt, und die Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind beispielsweise die bereits genannten Schutzkolloide. Bevorzugt werden keine weiteren Schutzkolloide als Polyvinylalkohole als Verdüsungshilfe eingesetzt.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Zur hydrophoben Ausrüstung können vor der Trocknung der Dispersionen diesen noch ein oder mehrere Hydrophobierungsmittel aus der Gruppe umfassend Fettsäuren und Fettsäurederivate sowie Organosiliciumverbindungen zugegeben werden. Dazu geeignete Verbindungen sind beispielsweise in der DE-A 10323205 aufgezählt.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Alternativ hierzu können die Biozide, sofern diese in fester Form vorliegen, der getrockneten Polymerdispersion auch nachträglich als Pulver zugemischt werden.

Diese mit Bioziden ausgerüsteten Dispersionspulver können in vielfältigen mineralischen Baustoffmassen eingesetzt werden. Beispielsweise in Verbindung mit hydraulisch abbindenden Bindemitteln wie Zementen (Portland-, Aluminat-, Trass-, Hütten-, Magnesia-, Phosphatzement) oder Wasserglas, oder in Gips-haltigen Massen. In Kalk-haltigen Massen, oder zementfreien und Kunststoff-gebundenen Massen. Vorzugsweise für die Herstellung von Bauklebern, insbesondere Fliesenkleber und Vollwärmeschutzkleber, sowie in Putzen, Spachtelmassen, Fussbodenspachtelmassen, Verlaufsmassen, Dichtschlämmen, Fugenmörtel und Farben, und auch für Dichtungsmembranen im Tunnelbau und Untertagebau.

Besonders vorteilhaft ist der Einsatz dieser Redispersionspulver bei der Vergütung von Beschichtungen im Außenbereich, die sich auf diesem Weg mit deutlich geringeren Wirkstoffgehalten als bisher verwendet gegen mikrobiologischen Befall schützen lassen. Die vorliegenden Ergebnisse deuten daraufhin, dass sich die Einsatzmenge an Biozid um einen Faktor 10 und mehr reduzieren lässt, mit entsprechenden ökonomischen, ökologischen und arbeitssicherheitsrelevanten Vorteilen.

Die nachfolgenden Beispiele dienen der weiteren Erläuterung der Erfindung:

### Beispiel 1:

Eine polyvinylalkoholstabilisierte Dispersion eines Copolymeren aus Vinylacetat, Vinylversatat (Veova10) und Ethylen mit einer Glasübergangstemperatur von 5°C, wird mit 10 Teilen (fest/fest) eines Polyvinylalkoholes mit einem Verseifungsgrad von 88 Mol-% und einer Viskosität nach Höppler von 4 mPas versetzt und auf einen Festgehalt von 35 % eingestellt. Zu dieser Dispersion wird ein Menge N-Octylisothiazolinon (in Form von Acticide OTW) entsprechend einem Wirkstoffgehalt von 750 ppm auf Pulver zugegeben und die Dispersion sprühgetrocknet.

### Beispiel 2:

Eine polyvinylalkoholstabilisierte Dispersion eines Copolymeren aus Vinylacetat, Vinylversatat (Veova10) und Ethylen mit einer Glasübergangstemperatur von 5°C, wird mit 10 Teilen (fest/fest) eines Polyvinylalkoholes mit einem Verseifungsgrad von 88 Mol-% und einer Viskosität nach Höppler von 4 mPas versetzt und auf einen Festgehalt von 35 % eingestellt. Zu dieser Dispersion wird eine Menge N-Octylisothiazolinon (in Form von Parmetol DF18) entsprechend einem Wirkstoffgehalt von 350 ppm auf Pulver zugegeben und die Dispersion sprühgetrocknet.

### Vergleichsbeispiel 3:

Es wurde analog der Beispiele 1 und 2 vorgegangen, jedoch ohne Biozidzugabe.

### Anwendungstechnische Prüfung:

Mit Hilfe der Dispersionspulver aus den Beispielen 1 und 2 sowie dem Vergleichsbeispiel 3 wurde ein Putzbeschichtung gemäß Tabelle 1 formuliert und an einer Außenfassade aufgetragen.

**Tabelle 1:**

| | | |
|---|---|---|
| 70.0 | Gew.Teile | Dyckerhoff Weißzement |
| 456.3 | Gew.Teile | Kreide (Calcit 500) |
| 282.5 | Gew.Teile | Kreide (Calcit 0.5-1.0) |
| 67.5 | Gew.Teile | Kalkhydrat |
| 70.0 | Gew.Teile | Kreide (Omya BL) |
| 14.5 | Gew.Teile | Titandioxid (Kronis 2959) |
| 4.4 | Gew.Teile | Faser (Arbocel BC 1000) |
| 1.7 | Gew.Teile | Mineralischer Verdicker (Lanco Thix P12) |
| 1.6 | Gew.Teile | Methylcellulose (Tyolose MH 10001 P4) |
| 30.0 | Gew.Teile | Dispersionspulver |
| 25.0 | Gew.Teile | Wasser auf 100 Gew.Teile Trockenmischung |

### Vergleichsbeispiel 4:

Das biozidfreie Pulver aus Vergleichsbeispiel 3 wurde in der Formulierung eingesetzt und 225 ppm N-Octylisothiazolinon (Acticide OTW) über das Anmachwasser zur Putzbeschichtungsformulierung zugegeben.

### Prüfung des Fassadenbewuchses:

Mit den Putzformulierungen, welche in der angegebenen Weise mit Pulvern gemäß der Beispiele 1 und 2 sowie der Vergleichsbeispiele 3 und 4 modifiziert wurden, sind Polystyrolschaumplatten, die mit einem zementären Armierungsmörtel versehen waren, beschichtet worden, und über 11 Monate im Freien bewittert worden. Das Bewuchsverhalten wurde in regelmäßigen Abständen kontrolliert und qualitativ mit folgender Skala bewertet:
0 = kein Bewuchs, + = geringer Bewuchs, ++ = mittlerer Bewuchs, +++ = starker Bewuchs.
Die Ergebnisse sind in Tabelle 2 zusammengefaßt.

**Tabelle 2:**

| Beispiel | 3 Monate | 6 Monate | 9 Monate | 12 Monate |
|---|---|---|---|---|
| Beispiel 1 | 0 | 0 | 0 | 0 |
| Beispiel 2 | 0 | 0 | 0 | 0 |
| Vgl.bsp. 3 | 0 | + | ++ | +++ |
| Vgl.bsp. 4 | 0 | 0 | + | + |

Die Beispiele zeigen die hervorragende Wirkung beim erfindungsgemäßen Vorgehen. Ungeschützte Systeme (Vergleichsbeispiel 3) zeigen relativ früh bereits starken Bewuchs. Auch durch direkten Zusatz von hohen Wirkstoffmengen (Vergleichsbeispiel 4) lässt sich der Bewuchs nicht vollständig unterdrücken. Die erfindungsgemäßen Beispiele hingegen zeigen, dass trotz erheblich geringerer Wirkstoffkonzentration (Bsp. 1 = 22.5 ppm, Bsp. 2 = 10.5 ppm, Bsp. 4 = 225 ppm Biozidanteil, jeweils bezogen auf Formulierung) ein sicherer Schutz gewährleistet ist.

## Patentansprüche

1. Verwendung von Biozide enthaltenden, in Wasser redispergierbaren Polymerpulver-Zusammensetzungen in mineralischen Baustoffmassen, wobei die in Wasser redispergierbaren Polymerpulver-Zusammensetzungen auf Basis eines filmbildenden Polymerisats 0.001 bis 0.5 Gew.-% eines biozid wirkenden Additivs enthalten.

2. Verwendung nach Anspruch 1, **dadurch gekennzeichnet, dass** als Biozide Fungizide eingesetzt werden.

3. Verwendung nach Anspruch 1 oder 2, **dadurch gekennzeichnet, dass** als Biozide Verbindungen aus der Gruppe der Isothiazolinone und Benzisothiazolinone eingesetzt werden.

4. Verwendung nach Anspruch 3, **dadurch gekennzeichnet, dass** als Biozid N-Octylisothiazolinon eingesetzt wird.

5. Verwendung nach Anspruch 1 bis 4, **dadurch gekennzeichnet, dass** die Biozide in einer Menge von 0.001 bis 0.1 Gew.-%, bezogen auf das Gesamtgewicht der in Wasser redispergierbaren-Polymerpulver-Zusammensetzung, eingesetzt werden.

6. Verwendung nach Anspruch 1 bis 5, **dadurch gekennzeichnet, dass** als filmbildendes Polymer eines auf der Basis von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren eingesetzt wird.

7. Verwendung nach Anspruch 6, **dadurch gekennzeichnet, dass** als filmbildendes Polymer eines aus der Gruppe umfassend Mischpolymerisate mit Vinylacetat und Ethylen, Mischpolymerisate mit Vinylacetat, Ethylen und einem Vinylester von α-verzweigten Monocarbonsäuren mit 9 bis 11 C-Atomen, Mischpolymerisate mit Styrol und einem oder mehreren Monomeren aus der Gruppe Methylacrylat, Ethylacrylat, Propylacrylat, n-Butylacrylat, 2-Ethylhexylacrylat eingesetzt wird.

8. Verwendung nach Anspruch 1 bis 7, **dadurch gekennzeichnet, dass** die in Wasser redispergierbaren Polymerpulver-Zusammensetzungen **dadurch** erhalten wird, dass das Biozid den wässrigen Polymerdispersionen vor der Trocknung zugemischt wird, oder erst nach der Trocknung zugegeben wird.

9. Verwendung nach Anspruch 1 bis 8 in Verbindung mit hydraulisch abbindenden Bindemitteln wie Zementen oder Wasserglas, oder in Gips-haltigen Massen, oder in Kalk-haltigen Massen, oder in zementfreien und oder in Kunststoff-gebundenen Massen.

10. Verwendung nach Anspruch 9 für die Herstellung von Bauklebern, insbesondere Fliesenkleber und Vollwärmeschutzkleber, sowie in Putzen, Spachtelmassen, Fussbodenspachtelmassen, Verlaufsmassen, Dichtschlämmen, Fugenmörtel und Farben, und für Dichtungsmembranen im Tunnelbau und Untertagebau.

## Claims

1. Use of biocide-containing, water-redispersible polymer powder compositions in mineral building compositions, with the water-redispersible polymer powder compositions based on a film-forming polymer containing from 0.001 to 0.5% by weight of a biocidally active additive.

2. Use according to Claim 1, **characterized in that** fungicides are used as biocides.

3. Use according to Claim 1 or 2, **characterized in that** compounds from the group consisting of isothiazolinones and benzisothiazolinones are used as biocides.

4. Use according to Claim 3, **characterized in that** N-octylisothiazolinone is used as biocide.

5. Use according to any of Claims 1 to 4, **characterized in that** the biocides are used in an amount of from 0.001 to 0.1% by weight, based on the total weight of the water-redispersible polymer powder composition.

6. Use according to any of Claims 1 to 5, **characterized in that** a polymer based on one or more monomers from the group consisting of vinyl esters, (meth)acrylic esters, vinylaromatics, olefins, 1,3-dienes and vinyl halides and, if appropriate, further monomers which are copolymerizable therewith is used as film-forming polymers.

7. Use according to Claim 6, **characterized in that** a polymer from the group consisting of copolymers comprising vinyl acetate and ethylene, copolymers comprising vinyl acetate, ethylene and a vinyl ester of α-branched monocarboxylic acids having from 9 to 11 carbon atoms, copolymers comprising styrene and one or more monomers from the group consisting of methyl acrylate, ethyl acrylate, propyl acrylate, n-butyl acrylate, 2-ethylhexyl acrylate is used as film-forming polymer.

8. Use according to any of Claims 1 to 7, **characterized in that** the water-redispersible polymer powder compositions are obtained by mixing the biocide into the aqueous polymer dispersions prior to drying or adding it only after drying.

9. Use according to any of Claims 1 to 8 in conjunction with hydraulically setting binders such as cements or water glass or in gypsum-containing compositions or in lime-containing compositions or in cement-free compositions and/or in compositions bound by means of polymers.

10. The use as claimed in Claim 9 for the production of building adhesives, in particular tile adhesives and thermal insulation adhesives, and in plasters and renders, knifing fillers, flooring screeds, leveling compositions, sealing slurries, jointing mortars and paints and for sealing membranes in tunnel construction and underground works.

## Revendications

1. Utilisation dans des matériaux de construction minéraux de compositions pulvérulentes polymères redispersibles dans l'eau et contenant des biocides, où les compositions pulvérulentes polymères redispersibles dans l'eau à base d'un polymère filmogène contiennent de 0,001 à 0,5% en poids d'un additif à action biocide.

2. Utilisation suivant la revendication 1, **caractérisée en ce que** l'on met en oeuvre des fongicides en tant que biocides.

3. Utilisation suivant la revendication 1 ou 2, **caractérisée en ce que** l'on met en oeuvre en tant que biocides des composés du groupe des isothiazolinones et des benzoisothiazolinones.

4. Utilisation suivant la revendication 3, **caractérisée en ce que** l'on met en oeuvre en tant que biocide de la N-octylisothiazolinone.

5. Utilisation suivant les revendications 1 à 4, **caractérisée en ce que** les biocides sont mis en oeuvre en une quantité de 0,001 à 0,1% en poids, par rapport au poids total de la composition polymère pulvérulente redispersible dans l'eau.

6. Utilisation suivant les revendications 1 à 5, **caractérisée en ce que** l'on met en oeuvre en tant que polymère filmogène un polymère à base d'un ou plusieurs monomères du groupe comprenant des esters vinyliques, des esters d'acide (méth)acrylique, des vinylaromatiques, des oléfines, des 1,3-diènes et des halogénures de vinyle, et le cas échéant d'autres monomères copolymérisables avec eux.

7. Utilisation suivant la revendication 6, **caractérisée en ce que** l'on met en oeuvre en tant que polymère filmogène un polymère du groupe comprenant des copolymères avec de l'acétate de vinyle et de l'éthylène, des copolymères avec de l'acétate de vinyle, de l'éthylène et un ester vinylique d'acides monocarboxyliques ramifiés en position α et comportant de 9 à 11 atomes de C, des copolymères avec du styrène et un ou plusieurs monomères du groupe de l'acrylate de méthyle, de l'acrylate d'éthyle, de l'acrylate de propyle, de l'acrylate de n-butyle, de l'acrylate de 2-éthylhexyle.

8. Utilisation suivant les revendications 1 à 7, **caractérisée en ce que** les compositions polymères pulvérulentes redispersibles dans l'eau sont obtenues en ce que l'on mélange le biocide aux dispersions aqueuses de polymère avant le séchage, ou qu'on l'ajoute seulement après le séchage.

9. Utilisation suivant les revendications 1 à 8 en liaison avec des liants à durcissement hydraulique tels que des ciments ou du verre soluble, ou dans des masses contenant du plâtre, ou dans des masses contenant de la chaux, ou dans des masses exemptes de ciment et / ou à liaison de matière synthétique.

10. Utilisation suivant la revendication 9 pour la préparation d'adhésifs pour construction, en particulier des adhésifs pour carrelages et des adhésifs pour isolation thermique totale, ainsi que dans des enduits, des mastics, des bouche-pores pour sols, des masses de nivellement, des badigeons d'étanchéité, des mortiers de jointoiement et des colorants, et pour des membranes d'étanchéité dans la construction de tunnels et d'ouvrages souterrains.
